# EUROPÄISCHE PATENTSCHRIFT

(11) **EP 0 846 595 B1**
(45) Veröffentlichungstag und Bekanntmachung des Hinweises auf die Patenterteilung: **14.08.2002**
(21) Anmeldenummer: 97120875.6
(22) Anmeldetag: 27.11.1997
(51) Int. Cl.: B60R 1/06

(54) **Kunststoffbaugruppe,insbesondere für Fahrzeuge**
Plastic assembly, particularly for vehicles.
Ensemble en plastique, en particulier pour véhicules.

(30) Priorität: 05.12.1996 DE 29620998 U
(43) Veröffentlichungstag der Anmeldung: 10.06.1998
(73) Patentinhaber: Donnelly Hohe GmbH & Co. KG, 97903 Collenberg (DE)
(72) Erfinder: Wagenblast, Joachim, Dr., 40470 Düsseldorf (DE)
(74) Vertreter: Zinngrebe, Horst, Dr.rer.nat.

(56) Entgegenhaltungen:
- DE-A- 2 726 311
- DE-A- 2 732 489
- DE-A- 2 740 189
- US-A- 4 175 833

## Beschreibung

Die Erfindung betrifft eine Kunststoffbaugruppe insbesondere für Fahrzeugspiegel, bestehend aus einer im wesentlichen ebenen Platte, an welcher wenigstens ein Formteil durch am Formteil ausgebildete Rasthaken befestigt ist.

Um beispielsweise bei einem Fahrzeugaußenspiegel die Platte, auf deren Vorderseite ein Spiegelglas mit mechanischem oder elektrischem Verstellmechanismus angeordnet ist, an der konkaven Spiegelkappe (Formteil) zu befestigen, ist es übliche Praxis, aus der Innenfläche des Formteils Rastelemente oder Dome auszuformen, in welche beispielsweise ein Gewindeteil eingelassen ist. Die Platte wird dann auf diese Dome aufgeschraubt und damit an dem Formteil befestigt. Eine andere Befestigungsart arbeitet mit Klipphaken, die aus der Innenfläche des Formteils ausgeformt sind (EP 433 584).

Bei der Herstellung des Formteils durch Spritzgießen werden im Bereich der Schraubdome und Klipphaken Anhäufungen der Kunststoffmasse unvermeidlich, die auf der gegenüberliegenden Außenfläche des Formteils meist Einfallstellen oder kleine Senken erzeugen. Diese müssen durch Ausfüllen nachbehandelt werden, um eine einwandfreie Sichtfläche des Formteils zu gewährleisten.

In der deutschen Offenlegungsschrift 42 04 621 wird dazu vorgeschlagen, bei der Herstellung eines Formkörpers in zwei Schritten vorzugehen, indem zunächst ein tragender Grundkörper gespritzt wird und nach Auftreten des unerwünschten Schwundes eine zweite Schicht über den Grundkörper gespritzt wird. Dieses Herstellungsverfahren ist relativ zeitaufwendig, weil mit dem Aufspritzen der Schicht nicht vor Ablauf der Aushärtezeit des Grundkörpers begonnen werden kann.

Der Erfindung liegt daher die Aufgabe zugrunde, Maßnahmen vorzusehen, die das Auftreten von Materialschwund im Sichtbereich eines Formteils ausschließen.

Aus der gattungsgemässen US-Patentschrift 4,175,833 ist ein elektrisch steuerbarer Außenspiegel für Fahrzeuge bekannt, bei welchem in ein Spiegelgehäuse eine Tragplatte für eine Spiegelbaugruppe eingeklemmt ist. Dazu sind am Rand der Platte Haken ausgestanzt, die von innen in Öffnungen der flach anliegenden Gehäusekappe eingreifen. Eine U-förmige Randleiste ist über die aneinander liegenden Enden der Platte und der Gehäusekappe geklebt. Bei Wartungsarbeiten oder im Fall einer Reparatur ist es bei diesem Außenspiegel nicht möglich, beispielsweise die Spiegelbaugruppe ohne Zerstörung der Platte und der Gehäusekappe auszutauschen.

Bei der eingangs genannten Kunststoffbaugruppe ist dazu erfindungsgemäß vorgesehen, daß die Rasthaken am Rand des Formteils ausgebildet sind. Im Randbereich treten die erwähnten Einsenkungen an den gegenüberliegenden Flächenstücken aufgrund der mit gleicher Wandstärke angespritzten oder durch Warmformen angebrachten Rasthaken nicht auf oder werden durch ein Gegenstück (im vorliegenden Fall die Randleiste) abgedeckt. Damit entfallen die zeitaufwendigen Nacharbeitungen der Sichtflächen, so daß der Zusammenbau der Kunststoffbaugruppe aus Formteil, Platte und Randleiste wesentlich vereinfacht ist.

Das Formteil kann eine konkave Kappe etwa nach EP 433 584 sein, deren Randhaken in Ausnehmungen im Randbereich der Platte eingreifen. Als weiteres Formteil kommt eine im Querschnitt V-förmige, sich zur Platte öffnende Randleiste in Betracht, deren Rastnasen im Randbereich in Öffnungen der Platte eingreifen und dabei, sofern die Kappe zusätzlich vorgesehen ist, Durchbrüche am Rand der Kappe durchdringen. Die Rastnasen können an dem äußeren Schenkel der Randleiste vorgesehen sein, wobei der innere Schenkel an dessen Rand Öffnungen besitzt, in die freie Enden von aus der Platte vorstehenden Rastelementen eintauchen. fahren ist relativ zeitaufwendig, weil mit dem Aufspritzen der Schicht nicht vor Ablauf der Aushärtezeit des Grundkörpers begonnen werden kann.

Der Erfindung liegt daher die Aufgabe zugrunde, Maßnahmen vorzusehen, die das Auftreten von Materialschwund im Sichtbereich eines Formteils ausschließen.

Bei der eingangs genannten Kunststoffbaugruppe ist dazu erfindungsgemäß vorgesehen, daß die Rasthaken am Rand des Formteils ausgebildet sind. Im Randbereich treten die erwähnten Einsenkungen an den gegenüberliegenden Flächenstücken aufgrund der mit gleicher Wandstärke angespritzten oder durch Warmformen angebrachten Rasthaken nicht auf oder werden durch ein Gegenstück (im vorliegenden Fall die Randleiste) abgedeckt. Damit entfallen die zeitaufwendigen Nacharbeitungen der Sichtflächen, so daß der Zusammenbau der Kunststoffbaugruppe aus Formteil, Platte und Randleiste wesentlich vereinfacht ist.

Das Formteil kann eine konkave Kappe etwa nach EP 433 584 sein, deren Randhaken in Ausnehmungen im Randbereich der Platte eingreifen. Als weiteres Formteil kommt eine im Querschnitt V-förmige, sich zur Platte öffnende Randleiste in Betracht, deren Rastnasen im Randbereich in Öffnungen der Platte eingreifen und dabei, sofern die Kappe zusätzlich vorgesehen ist, Durchbrüche am Rand der Kappe durchdringen. Die Rastnasen können an dem äußeren Schenkel der Randleiste vorgesehen sein, wobei der innere Schenkel an dessen Rand Öffnungen besitzt, in die freie Enden von aus der Platte vorstehenden Rastelementen eintauchen.

Bevorzugte Ausgestaltungen der Erfindung sind in den Unteransprüche angegeben.

Die Erfindung wird nachstehend im einzelnen anhand der in der beigefügten Zeichnung dargestellten Ausführungsbeispiele beschrieben.

Es zeigen:
- Fig. 1:: ein Vertikalschnitt durch eine aus Gehäusekappe, Trägerplatte und Randleiste bestehenden Kunststoffbaugruppe eines Fahrzeugsaußenspiegels, wobei auf der Vorderseite der Platte ein Spiegelglas montiert ist;
- Fig. 2:: eine schematische Vorderansicht der Baugruppe aus Fig. 1;
- Fig. 3 - 8: eine vergrößerte Ausschnittssdarstellung verschiedener Verbindungsorten von Platte, Randleiste und Gehäusekappe.

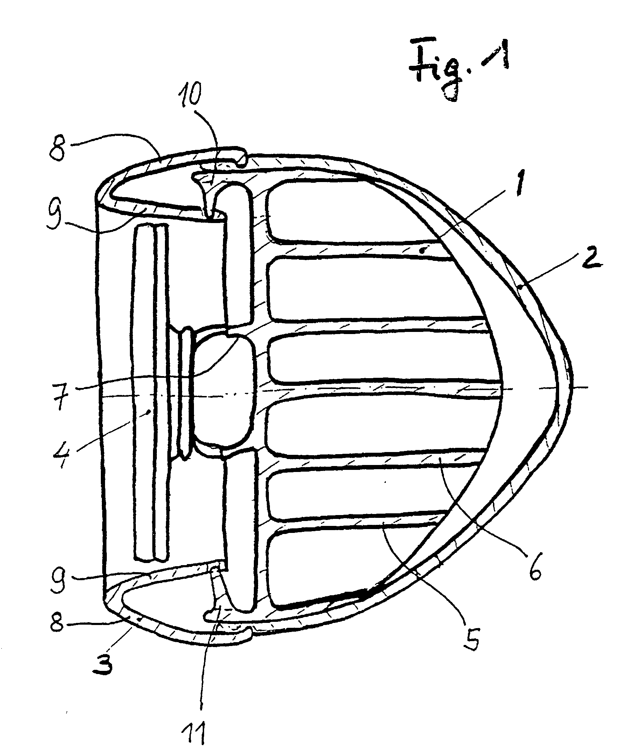

Die Erfindung wird nachstehend anhand der in Fig. 1 dargestellten Kunststoffbaugruppe beschrieben, welche aus einer Gehäusekappe 2 als Formteil, einer Randleiste 3 als weiteres Formteil und einer Trägerplatte 1 mit Verstärkungsrippen besteht. Von den in das Innere der Gehäusekappe 2 sich erstreckenden Verstärkungsrippen sind nur die beiden untersten mit 5 und 6 bezeichnet. Auf der den Verstärkungsrippen 5, 6 gegenüberliegenden Vorderseite der Platte 1 besitzt diese eine zentrale Ausformung 7, an welcher in nicht im einzelnen dargestellter Weise eine Spiegelglasbaugruppe 4 befestigt und in welcher Raum zur Aufnahme eines beispielsweise elektrischen Verstellmechanismus für das Spiegelglas der Spiegelglasbaugruppe 4 vorhanden ist. Gehäusekappe 2, Platte 1 und Randleiste 3 bestehen aus einem für Fahrzeugaußenspiegel üblicherweise verwendeten Kunststoff und können zusammen mit den an ihnen ausgebildeten und noch zu erwähnenden Rasthaken durch Spritzgießen, Warmformen, Warmformen und Stanzen und/oder durch Eigenverstärkung durch Recken mit anschließendem Tempern zwecks Ausschrumpfen hergestellt sein.

Die Randleiste 3 besitzt einen im wesentlichen V-förmigen Querschnitt, der sich zur Platte 1 hin öffnet, so daß die Randleiste 3 einen äußeren Schenkel 8 und einen inneren Schenkel 9 besitzt. An den Enden der beiden Schenkel 8 und 9, an den am Rand der Platte 1 zur Vorderseite vorstehenden Enden 10, 11 der Platte sowie an den Enden der Kappe 2 sind längs der in Fig. 2 mit A gestrichelt angegebenen Umfangsbereichen noch zu beschreibende Rasthaken ausgebildet, die eine gegenseitige Verankerung der Platte 1, der Kappe 2 und der Randleiste 3 derart erlauben, daß die eingangs erwähnten durch die Herstellungsart bedingten Einsenkungen oder Schrumpfungen dem einsehbaren Bereich entzogen sind.

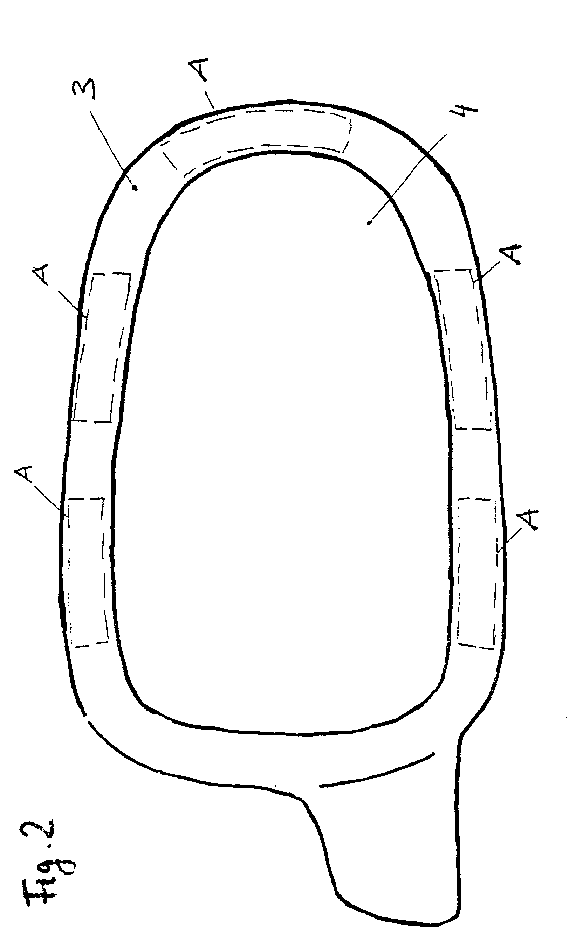

Gemäß Fig. 3 ist am Rand der Kappe 2 ein randparalleler Schlitz ausgebildet, in welchen ein am Rand des oberen Schenkels 8 der Randleiste 3 nach innen abgewinkelte Rasthaken 34 eintaucht. Entsprechend weist die Platte 1 unterhalb des genannten randparallelen Schlitzes in der Kappe 2 einen eigenen randparallelen Schlitz 14 auf, in welchen das Ende des Rasthakens 34 nach Durchdringen des Randschlitzes in der Kappe 2 eingreift. Damit ist die Kappe 2 in dem Bereich A (Fig. 2) sicher an der Platte 1 gehalten.

Neben dem Randschlitz 14 ist an das vorstehende Ende 16 der Platte 1 ein sich nach innen erstreckender Steg 12 angeformt, der in einer weiteren Rastnase 16 ausläuft. Die Rastnase 16 taucht in eine Randausnehmung des inneren Schenkels 9 ein, so daß auch der innere Schenkel 9 der Randleiste 3 sicher an der Platte 1 verankert ist.

Bei der Ausführungsform gemäß Fig. 4 besitzt die Kappe 2 wieder einen randparallelen Schlitz, in welchen ein Rasthaken 32, der am äußeren Schenkel 8 am Ende ausgebildet ist, eintaucht. Durch Vergleich mit Fig. 3 erkennt man, daß die Länge des Rasthakens 32 kürzer ist als diejenige des Rasthakens 34 in der Weise, daß der Rasthaken 32 nur etwa bis zur Hälfte der am freien Ende etwas materialverstärkten Kappe eindringt.

Das nach außen vorspringende Ende der Platte 1 gabelt sich in eine obere Leiste 11, aus welcher ein Noppen 13 nach oben vorsteht und von unten in den randparallelen Schlitz der Kappe 2 eindringt.

Die untere Leiste 15 der Platte 1 besitzt einen nach unten vorspringenden, angeformten Noppen 17, der von oben in einen randparallelen Schlitz des inneren Schenkels 9 einrasten kann. Wie ersichtlich ist auch bei dieser Ausführungsform die Kappe 2 mit der Platte 1 und der Randleisten 3 festverrastet.

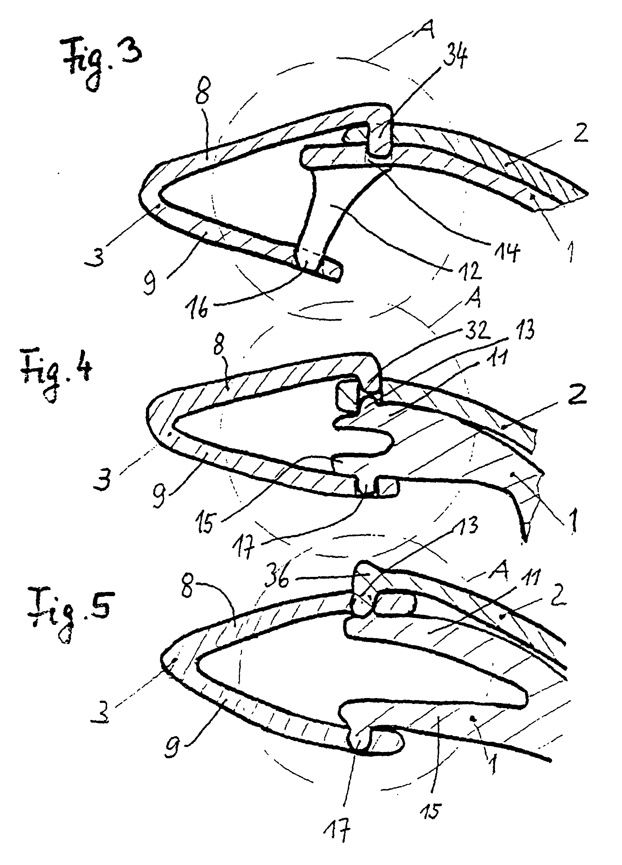

Bei dem Ausführungsbeispiel nach Fig. 5 sind am Ende des äußeren Schenkels 8 sowie am Ende des inneren Schenkels 9 randparallele Schlitze ausgeführt. Die Platte 1 ist an ihrem vorspringenden Ende wieder in die obere Leiste 11 mit am Ende erhabenem Noppen 13 und in eine untere Leiste 15 mit am Ende nach unten vorstehendem Noppen 17 aufgespalten. Der untere Noppen 17 rastet wie bei dem Ausführungsbeispiel nach Fig. 4 in den randparallelen Schlitz des inneren Schenkels 9 ein, während der Noppen 13 in der quer zur Ebene der Fig. 5 genommene Länge kürzer als der Noppen gemäß Fig. 4 ist, und sich innerhalb des randparallelen Schlitzes am äußeren Schenkel 8 mit einer Rastnase 36 in Längsrichtung abwechselt, die neben dem Noppen 13 von oben in den randparallelen Schlitz des äußeren Schenkels 8 einrastet.

Die in Fig. 6 dargestellte Ausführungsform ähnelt der in Fig. 3 dargestellten Ausgestaltung der Erfindung insofern, als an das nach außen vorstehende Ende der Platte 1 ein nach unten reichender Steg 12 mit abschließender Rastnase 16 angeformt ist. Die Rastnase 16 ist bei dem Ausführungsbeispiel gemäß Fig. 6 ballig ausgeführt und in einer balligen Einsenkung am verdickten Ende des inneren Schenkels 9 von oben eingeklipst.

Abweichend von der Ausführungsform gemäß Fig. 3 ist an das freie Ende der Kappe 2 eine im Querschnitt U-förmige Tasche 22 angeformt, in welche ein am Ende des äußeren Schenkels 8 ausgebildeter Rasthaken 38 eingesteckt ist. Die Tasche 32 ihrerseits durchgreift eine ihrer Form angepaßte Öffnung 18 am freien Ende der Platte 1.

Das Ausführungsbeispiel der Erfindung nach Fig. 7 sieht an den beiden Enden des äußeren Schenkels 8 sowie des inneren Schenkels 9 nach außen bzw. nach innen abgewinkelte Rasthaken 31 bzw 33 vor, die in randparallele Schlitze 21 bzw. 23 einrasten, welche an einer äußeren Leiste 25 bzw. einer inneren Leiste 27 am vorstehenden Ende der Platte 1 ausgebildet sind. Das freie Ende der Kappe 2 ist zu einem einwärts gebogenen Haken 29 geformt, der das äußere Ende der oberen Leiste 25 übergreift.

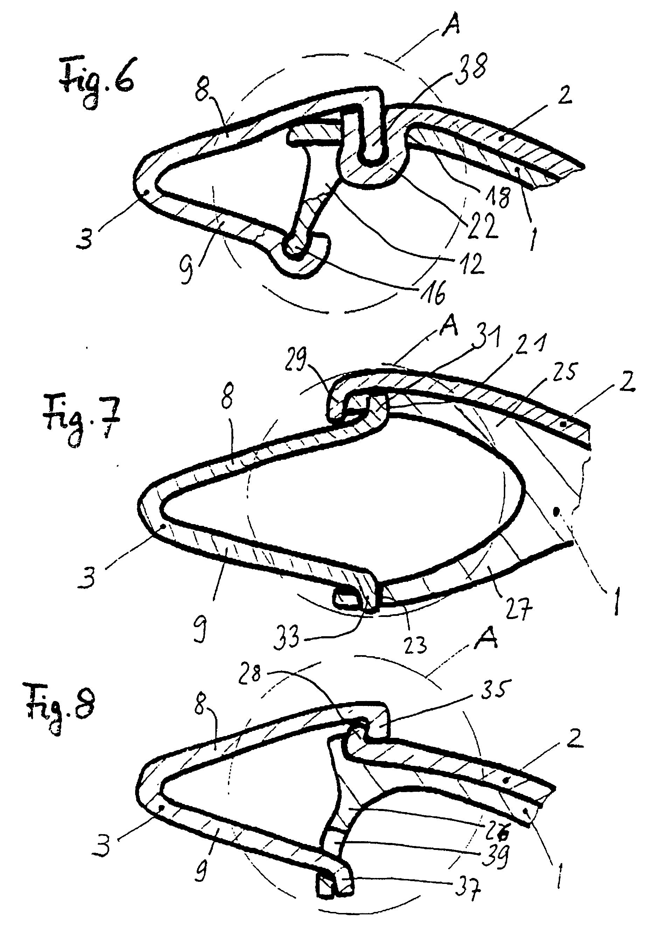

Bei Ausführungsbeispiel der Erfindung nach Figur 8 ist an das freie Ende der Platte 1 ein Steg 26 angeformt, welcher sich nach innen erstreckt und am Ende einen Schlitz 39 aufweist. Das zu einem nach innen gerichteten Haken 37 umgebogen Ende des inneren Schenkels 9 ist in dem Schlitz 39 verrastet. Gegenüber dem Schlitz 39 läuft der Steg zu einer Rastnase 40 aus, welche eine nach außen gebogene Rastnase 28 am Ende der Kappe 2 hintergreift. Das zu einer nach innen gebogenen Rastnase 35 ausgeformte Ende des äußeren Schenkels 8 ist hinter der Rastnase 28 der Kappe 2 eingerastet.

Man erkennt, daß Partien mit Materialanhäufungen, die zu den erwähnten herstellungsbedingten Einsenkungen u. dgl. führen können, an den miteinander verbundenen Teilen, insbesondere der Platte 1 und der Kappe 2, durch andere übergreifende Teile verdeckt sind.

## Patentansprüche

1. Kunststoffbaugruppe, insbesondere für Fahrzeugspiegel, welche eine im wesentlichen ebene Platte (1) zur Aufnahme einer Spiegelglasbaugruppe aufweist, an welcher ein erstes Formteil (2) durch in die Formteilwand integrierte Rastelemente (22, 28, 29) befestigt ist, sowie mit einem weiteren Formteil (3), von dem wenigstens ein Randabschnitt mit der Platte verbunden ist, **dadurch gekennzeichnet, daß** das weitere Formteil (3) einen sich zum aufgegabelten Rand (11, 12, 15, 25, 27, 26) der Platte (1) öffnenden Querschnitt hat und daß die Platte, das erste Formteil (2) und das weitere Formteil (3) durch randnahe Öffnungen und in die Öffnungen eingreifende Randhaken (34, 38, 31, 33, 37) des weiteren Formteils (3), den Plattenrand abdeckend, miteinander verbunden sind, wobei die Rastelemente und Randhaken gleiche Wandstärke wie der Rest der Formteile (2,3) haben.

2. Baugruppe nach Anspruch 1, **dadurch gekennzeichnet, daß** das weitere Formteil (3) am Rand Öffnungen aufweist, in welche an der Platte ausgebildete Noppen (13, 17) eingreifen.

3. Baugruppe nach Anspruch 1 oder 2, **dadurch gekennzeichnet, daß** die Randhaken (32, 34, 38) des weiteren Formteils (3) von außen in Öffnungen eintauchen, welche am Rand des ersten Formteils (2) ausgebildet sind.

4. Baugruppe nach einem der vorstehenden Ansprüche, **dadurch gekennzeichnet, daß** Noppen (13) der Platte (1) von innen und Randhaken (32) des weiteren Formteils (3) von außen gemeinsam in Öffnungen eingreifen, die am Rand des ersten Formteils (2) ausgebildet sind.

5. Baugruppe nach einem der vorstehenden Ansprüche, **dadurch gekennzeichnet, daß** Randhaken (28) des ersten Formteils (2) und Randhaken (35) der weiteren Formteils (3) einander wechselseitig hintergreifen.

6. Baugruppe nach einem der vorstehenden Ansprüchen, **dadurch gekennzeichnet, daß** Platte, Formteile und Rastelemente durch Spritzgießen oder durch Warmformen oder durch Warmformen und Stanzen und/oder durch Eigenverstärkung durch Recken mit anschließendem Tempern zwecks Ausschrumpfen hergestellt sind.

## Claims

1. Plastics assembly, particularly for vehicle mirrors, having a substantially plane plate (1) for accommodating a mirror glass assembly to which a first moulded member (2) is attached by means of locking elements (22, 28, 29) integrated into the moulded member wall and with a further moulded member (3) of which at least one edge section is connected to the plate, **characterised in that** the further moulded member (3) has a cross-section open to the forked edge (11, 12, 15, 25, 27, 26) of the plate (1) and that the plate, the first moulded member (2) and the further moulded member (3) are connected to each other by means of openings close to the edge and edge hooks (34, 38, 31, 33, 37) of the further moulded member (3) engaging into the openings, covering the plate edge, whereby the locking elements and edge hooks have the same wall thickness as the remainder of the moulded members (2, 3).

2. Assembly according to Claim 1, **characterised in that** the further moulded member (3) has openings on its edge into which bumps (13, 17) formed on the plate engage.

3. Assembly according to Claim 1 or 2, **characterised in that** the edge hooks (32, 34, 38) of the further moulded member (3) sink from outside into openings formed on the edge of the first moulded member (2).

4. Assembly according to one of the previous claims, **characterised in that** bumps (13) of the plate (1) from inside and edge hooks (32) of the further moulded member (3) from outside together engage in openings formed on the edge of the first moulded member (2).

5. Assembly according to one of the previous claims, **characterised in that** edge hooks (28) of the first moulded member (2) and edge hooks (35) of the further moulded member (3) engage behind one another.

6. Assembly according to one of the previous claims, **characterised in that** the plate, moulded members and locking elements are produced by injection moulding or by hot forming and stamping and/or by self-reinforcement through stretch-forming with subsequent tempering for the purpose of shrinking.

## Revendications

1. Bloc en matière plastique, en particulier pour rétroviseur, comprenant une platine (1) sensiblement plane destinée à recevoir un bloc pour miroir, contre laquelle est fixée une première pièce moulée (2) au moyen d'éléments à encliqueter (22, 28, 29) intégrés dans la paroi de ladite pièce moulée, ainsi qu'une autre pièce moulée (3) dont au moins un bord est assemblé avec la platine, **caractérisé en ce que** l'autre pièce moulée (3) est formée avec une section s'ouvrant vers le bord ramifié (11, 12, 15, 25, 27, 26) de la platine (1) et **en ce que** la platine, la première pièce moulée (2) et l'autre pièce moulée (3) sont assemblées entre elles de manière à recouvrir le bord de la platine, par l'intermédiaire d'orifices proches du bord et de crochets périphériques (34, 38, 31, 33, 37), entrant en prise dans les orifices, réalisés sur l'autre pièce moulée (3), les éléments à encliqueter et les crochets périphériques ayant la même épaisseur de paroi que le reste des pièces moulées (2, 3).

2. Bloc selon la revendication 1, **caractérisé en ce que** l'autre pièce moulée (3) comporte des orifices sur le bord, dans lesquels entrent en prise des tétons (13, 17) réalisés sur la platine.

3. Bloc selon la revendication 1 ou 2, **caractérisé en ce que** les crochets périphériques (32, 34, 38) de l'autre pièce moulée (3) pénètrent à partir de l'extérieur dans des orifices qui sont réalisés sur le bord de la première pièce moulée (2).

4. Bloc selon une des revendications précédentes, **caractérisé en ce que** des tétons (13) de la platine (1) entrent en prise à partir de l'intérieur dans des orifices et des crochets périphériques (32) de l'autre pièce moulée (3) entrent en prise à partir de l'extérieur dans les mêmes orifices, qui sont réalisés sur le bord de la première pièce moulée (2).

5. Bloc selon une des revendications précédentes, **caractérisé en ce que** des crochets périphériques (28) de la première pièce moulée (2) et des crochets périphériques (35) de l'autre pièce moulée (3) s'engagent les uns derrière les autres réciproquement.

6. Bloc selon une des revendications précédentes, **caractérisé en ce que** la platine, les pièces moulées et les éléments à encliqueter sont fabriqués par moulage par injection ou par thermoformage ou par thermoformage et découpage et/ou par auto-renforcement par étirage avec cuisson consécutive en vue d'une contraction.
